(19) Europäisches Patentamt / European Patent Office / Office européen des brevets

(11) **EP 2 181 380 B1**

(12) **EUROPEAN PATENT SPECIFICATION**

(45) Date of publication and mention
of the grant of the patent:
**31.07.2013 Bulletin 2013/31**

(51) Int Cl.:
*G06F 3/0354* (2013.01)  *G06F 3/03* (2006.01)
*B43L 1/00* (2006.01)  *B43L 1/06* (2006.01)
*B43L 1/10* (2006.01)

(21) Application number: **08772739.2**

(22) Date of filing: **25.06.2008**

(86) International application number:
**PCT/BE2008/000046**

(87) International publication number:
**WO 2009/000053 (31.12.2008 Gazette 2009/01)**

(54) **INTERACTIVE ENAMELLED VISUAL COMMUNICATION PANEL**

INTERAKTIVE EMAILIERTE VISUELLE KOMMUNIKATIONSTAFEL

PANNEAU DE COMMUNICATION VISUEL INTERACTIF EMAILLE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.06.2007 BE 200700319**

(43) Date of publication of application:
**05.05.2010 Bulletin 2010/18**

(73) Proprietor: **Polyvision, Naamloze Vennootschap
3600 Genk (BE)**

(72) Inventor: **GYPEN, Leo, Albert, Julia
B-3520 Zonhoven (BE)**

(74) Representative: **Donné, Eddy
M.F.J.Bockstael
Arenbergstraat 13
2000 Anvers (BE)**

(56) References cited:
**EP-A- 0 327 436    WO-A-00/00666
WO-A-01/16872    WO-A-02/37409
WO-A-99/16625    WO-A-2006/119592
BE-A3- 1 015 482**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention concerns an interactive vitreous (porcelain) enamelled visual communication panel, i.e. a board that can be written on for example with dry-erasable felt-tip pens and that can be erased or a chalkboard to write on with chalk or the like.

Interactive communication panels are capable of digitally storing the data that are written on the communication panel for example during a presentation, and possibly they may simultaneously project these data and provide other interactions between the communication panel, a computer and several peripherals.

Known interactive communication panels use the well-known "touch-screen" technology, whereby a flexible screen is put in front of a pressure-sensitive panel, such that while the flexible screen is being written on, the data concerned are registered.

The pressure-sensitive panel usually consists of a grid of crossed conductors which make contact when a point in the pressure-sensitive panel is being pressed on.

A problem that arises in this case is that the flexible screen is not easy to erase. Furthermore, such screens show poor mechanical properties such as scratch and wear resistance.

Vitreous (porcelain) enamelled communication panels cannot be used as flexible screens, due to the high rigidity of the steel plate which are is coated with one or several layers of vitreous enamel.

Another known type of interactive communication panels provides a surface with an optically readable position-encoding pattern for creating an electronic display of the information that is written on the surface.

A first major advantage is that such an interactive communication panel may have an extremely simple construction and does not need to comprise any electronic components as such to be able to form an electronic representation of the information that is written on the surface.

Combined with a reading instrument that is capable of forming an electronic representation of the information that is written on the communication panel, an interactive communication panel is thus obtained.

Such a reading instrument may for example consist of a writing means, such as a dry-erasable felt-tip pen or a piece of chalk, provided with optical reading means and with means that permanently follow the changes in position of the writing means. A second major advantage consists in that such interactive communication panels, provided with an optically readable position-encoding pattern, register what is written on the board with significantly more accuracy than pressure-sensitive interactive boards.

Such an interactive communication panel and the accompanying reading instruments are described in detail in WO 01/16872,

The invention relates to an interactive visual communication panel according to the preamble of claim 1.

A problem that arises now is that the intended writing surfaces cannot be erased well which, after a while, compromises the readability of the optically readable position-encoding pattern.

EP 0.327.436 describes a screen printing technique suitable for the marking of glass bottles. WO 2006/119592 discloses a method for manufacturing a visual communication panel with a vitreous enamelled surface designed to be written on. The invention provides an interactive visual communication panel according to claim 1.

In order to obtain a durable and economical interactive communication panel, the present invention concerns an interactive visual communication panel as claimed in claim 1.

Such a communication panel offers all the advantages of a communication panel as described in WO 01/16872, and it additionally guarantees the long-lasting readability of the position-encoding pattern.

Indeed, thanks to their high scratch resistance and wear resistance, such ceramic boards retain good erasing characteristics, even after many cycles of use.

According to a preferred embodiment, the above-mentioned pattern is provided by means of a silkscreen printing technique that uses a very fine sieve, for example a sieve of 140T or even finer, what comes down to a sieve having at least 140 meshes per stretching centimetre, and whose wire gauge amount to less than 35 $\mu$m, for example 31 $\mu$m.

Such sieves make it possible to apply a vitreous enamelled pattern, for example a dot pattern as mentioned in WO 01/16872 and as described in detail in Swedish patent application No. 9903541-2, on for example a steel plate.

Such a steel plate has been provided beforehand with for example a predominantly uniform layer of vitreous enamel, for example a white or green layer of vitreous enamel, fired at a temperature of more than 500°C, for example at 820°C.

The above-mentioned 140T sieve with fine wires is provided with a photo-sensitive substance that is subsequently exposed in correspondence with the aimed pattern. Next, the sieve is put in front of the enamel plate to be printed on, and an enamel mixture is provided through the openings that is fired later on at a temperature that is somewhat lower than the temperature at which the first layer or layers had been burnt in, but that is always higher than 500°C, for example 740°C.

According to a particularly preferred embodiment, the above-mentioned pattern is provided by means of a direct photographic process.

This technique is advantageous in that a pattern can be provided with even more accuracy than with the silkscreen printing technique.

A photosensitive emulsion is hereby provided on the enamelled steel plate, possibly by means of a sieve. As soon as it has dried, the film is put against the plate with the photosensitive emulsion printed on it, and only then the enamelled plate with the emulsion and the film is exposed, in correspondence with the aimed representation.

Next, the film is removed and the non-exposed and thus non-bonded emulsion is removed.

The emulsion is formed of polymers in which have been provided vitreous enamel particles and pigment. There where the emulsion is exposed, the polymers bond and the emulsion adheres to the enamel plate.

After removal of the non-bonded emulsion, the remaining vitreous enamel, i.e. the enamel particles and the pigment, are fired at a temperature that is lower than the temperature at which the first layer or layers had been burnt in, but always at more than 500°C, for example at 740°C.

The advantage that is obtained by applying the direct photographic process is the high accuracy or the high resolution of the print, which is required for reading the position-encoding pattern.

The pattern may also be provided by means of what is called the toner jet technique.

This regards the printing of a ceramic dot pattern by means of a printing technique that is analogous to the known photocopy technique, after which the obtained pattern is fired at more than 500°C. The particle size of the ceramic toner hereby amounts to only a few $\mu$m.

The pattern can also be provided by means of what is called laser-perforated foil printing.

The ceramic dot pattern is printed by applying a foil on the surface of the enamelled steel. This foil has been perforated beforehand by means of a laser, in correspondence with the dot pattern. Then, a ceramic paste is provided on the enamelled steel via rake printing, after which the foil is removed and the obtained pattern is fired at over 500°C.

The pattern can also be provided by means of transfer printing.

The ceramic dot pattern is first provided on a foil, after which it is transferred for example by heat from the foil to the surface of the vitreous enamelled plate. Next, the obtained pattern is fired at over 500°C.

The pattern can also be provided by means of what is called "laser marking" with the addition of enamel.

A uniform layer of enamel and pigment is hereby provided on the enamelled plate. Then, the dot pattern is melted on the enamelled steel by locally melting enamel and pigment.

As an alternative, use can be made of laser marking without any enamel being added.

The dot pattern is hereby burnt directly in the enamelled plate by means of a laser by locally melting the white enamel topcoat, as a result of which it becomes transparent, which results in black dots due to the base enamel becoming visible.

The ceramic paste that is used for printing the position-encoding pattern may be composed as follows, for example:

1) 30 to 70 parts by weight uncoloured organic silkscreen printing media for printing. These media evaporate entirely while the paste is being fired;

2) 20 to 60 parts by weight boro-silicate glass having the following composition: 19.9 % sodium; 0.9 % aluminium; 32.8 % silicon; 1.51 % sulphur; 16.0 % potassium; 5.7 % barium; 22.2 % titanium; 0.9 % copper;

3) 5 to 20 parts by weight ceramic colorant having the following composition: 1.1 % aluminium; 8.4% silicon; 0.6 % sulphur; 30.9 % chromium; 4.3 % manganese; 28.2 % iron; 26.5 % copper.

Given the high gloss of enamelled panels compared to that of paper or other traditional materials that are used for communication panels, the present invention also aims to reduce the gloss.

To that end, the present invention also concerns an interactive communication panel which mainly consists of a support, for example a steel plate, onto which is provided an vitreous enamel layer, whereby on the visible side of the layer of enamel, where a position-encoding pattern is provided as well, a sol gel dispersion is provided that is subsequently tempered so as to form a predominantly glassy or ceramic cover layer.

The method for manufacturing such a communication panel with a sol gel dispersion is described in detail in EP 1,016,588, whose content is incorporated in the present patent application by this reference to it.

This cover layer is formed by applying what is called a sol gel dispersion on the layer of vitreous enamel and by subsequently tempering the dispersion at a temperature ranging between 200° and 600°C and which preferably amounts to some 510°C.

The above-mentioned sol gel dispersion is defined here as a usually colloidal solution of inorganic metal salts and/or organic metal compounds such as metal alkoxides, whereby this solution or, in particular, this liquid dispersion is transformed in what is called a 'sol' condition during a drying process and forms the above-mentioned cover layer after having been tempered.

The sol gel dispersion is hereby preferably prepared from a base solution of metal alkoxides to which a preferably watery colloidal silica solution and/or particles of metal oxide or the like are added.

Preferably, the reduction of specular gloss by sol gel coating can be obtained in two ways. One is to increase the diffuse reflection of incident light, thus inherently decreasing the specular reflection. This is the principle of an Anti Glare (AG) sol gel coating. The second way is to apply a sol gel coating which decreases the specular reflection itself, which is called an Anti Reflection sol gel coating. The principle of an Anti Reflection sol gel coating is described "in detail below".

The thickness of the sol gel layer is such that it corresponds to a quarter of the wavelength of the visible light or of the light that is used for reading the pattern, what comes down to a layer thickness for the sol gel of 75 to 180 nanometres, and such that light which is reflected by the surface which forms the transition between the ambient air and the sol gel layer is at least partly neutralised by light that is reflected by the surface which forms the transition between the sol gel layer and the underlying layer of vitreous enamel.

Indeed, if the sol gel layer has a thickness of a quarter of a wavelength of the light whose reflection one aims to reduce, and the sol gel layer has a refractive index that is smaller than that of the underlying layer, in this case a layer of vitreous enamel, then the two reflected waves will have a phase difference of 180°, at least the waves that are perpendicularly incident on the surface. The light waves that are incident at an aberrant angle of incidence are not neutralised, but they are strongly suppressed. Mathematically, this is expressed as

$$n \cdot d = \lambda / 4$$

Whereby n is the refractive index of the sol gel layer, d is the thickness of the layer and $\lambda$ is the wavelength of the light. The product of n and d is called the optical thickness of the layer.

Such an anti-reflection finish that is formed of a single layer is only optimal for a single wavelength. Usually, the thickness of the layer is adapted to the centre of the visible spectrum, what comes down to some 550 nm. This wavelength is called the 'design wavelength'. Consequently, such a layer will have a minimal reflection in the centre of the visible spectrum.

The size of this minimum depends on the size of the refractive index of the sol gel layer. The optimum is calculated as

$$n = (n_0 \ n_s)^{1/2}$$

whereby no stands for the refractive index of the surrounding medium (usually air $n_0 = 1$) and whereby $n_s$ is the refractive index of the substrate. In most applications, the substrate is enamel or a polymer material having a refractive index of $_s$ close to 1.5.

In this case, the ideal refractive index of the sol gel layer would amount to 1.22.

A single transparent sol gel layer as described in EP 1,016,588 with a layer thickness that is equal to one quarter of the wavelength of visible light results in an anti-reflective layer with a sol gel layer thickness between 75 and 180 nanometres.

The availability of materials having such a low refractive index restricts the effectiveness of an antireflective finish formed of a single layer. The materials that are most used are $MgF_2$ having a refractive index of 1.38, and also the nano-porous $SiO_2$ is often used.

If the substrate is a white vitreous enamelled enamel, the white colour is obtained thanks to the precipitation of $TiO_2$. The qualities of enamel are quite similar to those of borosilicate glass, but with the presence of $TiO_2$ (having a reflection index of 2.4), the reflection index of the vitreous enamel substrate is estimated at 1.6 to 1.7, as is confirmed by ellipsometric measurements.

An anti-reflection finish can be made much more effective by providing two or several layers. An anti-reflection finish with two layers whose thickness equals one quarter of the wavelength of the light whose reflection one aims to reduce, has a simple construction.

The construction of an anti-reflection finish with more than two layers becomes more complex, however, and its design requires complicated calculations. In this case, layers are sometimes provided for example, whose thickness corresponds to half a wavelength of the light whose reflection one aims to reduce.

The present invention also concerns some specific aspects regarding the reading instrument that is capable of forming an electronic representation of the information that is written on the communication panel.

These specific aspects solve the problems caused by the higher gloss of enamelled panels.

A reading instrument that is capable of forming an electronic representation of the information that is written on the communication panel is preferably connected to the pen and is preferably provided with a light-sensitive detector that is designed to detect a position-encoding pattern on a writing panel so as to determine the current position of the pen, and further the reading instrument preferably comprises communication means that are fit for transmitting information regarding the position of the pen based on the position-encoding pattern as established by the above-mentioned detector to at least one external unit.

By means of the light-sensitive detector and the above-mentioned communication means on the one hand, and the position-encoding pattern on the writing panel on the other hand, the position changes of the felt-tip pen, pen or piece of chalk are permanently followed.

The reading instrument preferably also comprises a light source, for example a LED, to illuminate the surface of the communication panel, in particular to promote the readability of the pattern provided on it.

The light source may emit visible light or invisible, infrared light.

The ceramic paste used for the dot pattern may be such according to an aspect of the present invention that it absorbs the light of the light source of the reading instrument, such that the optical detection of the pattern is improved.

More specifically, the used ceramic paste can be such that it absorbs the infrared light of 800-950 nm.

In order to solve the reading problems caused by the often high gloss of enamel panels, the detector is preferably oriented such in relation to the above-mentioned light source, and possibly positioned at a distance thereof, that it mainly registers light outside the angle of reflection of the incident light beam.

The reading instrument that is connected to the pen, the felt-tip pen or the piece of chalk or the like, or the pen itself, can be made such that, when it is manipulated by a user, it is mainly held in a certain preferred direction in relation to the writing panel.

Such an embodiment can for example be obtained by providing a grip zone with such a design that it can only be held in mainly one particular way, in particular such that the above-mentioned aim is obtained.

In order to better explain the characteristics of the invention, the following preferred embodiment of an interactive enamelled visual communication panel according to the invention is described as an example only without being limitative in any way, with reference to the accompanying drawings, in which:

figure 1 schematically represents a visual communication panel according to the invention;
figures 2 and 3 represent the position-encoding pattern in detail;
figure 4 represents a section according to line IV-IV in figure 1 to a larger scale;
figure 5 represents the communication panel according to figure 1, together with a reading instrument according to the invention.

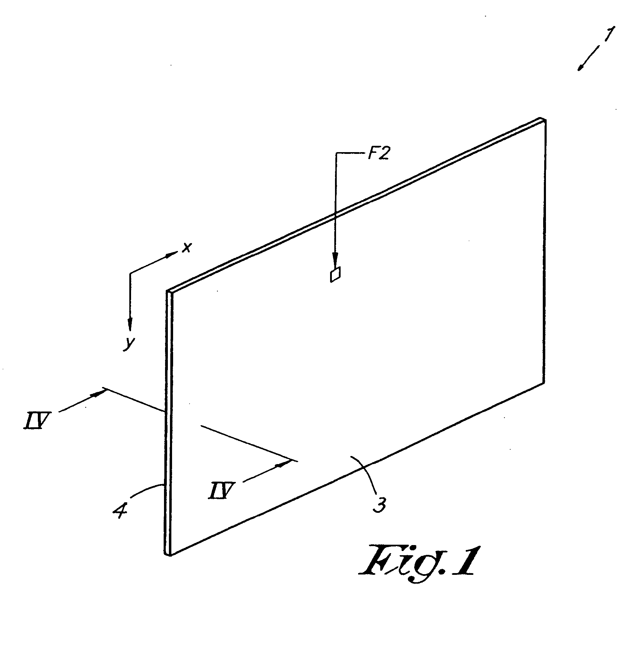

The visual communication panel 1 as represented in figure 1 mainly consists of a steel plate 2 having a thickness of 0.35 mm in this case, provided with a predominantly white layer of vitreous enamel 5 of 0.10 mm thick on the front 3 in this case.

The front 3 or the writing side of the communication panel 1 is additionally provided with a readable position-encoding pattern 6.

The position-encoding pattern 6 is formed of small black dots 7 in this case that can actually be provided over mainly the entire surface of the front 3 of the communication panel 1, and that are smaller than represented in the figures, such that a sufficiently large resolution is obtained.

The position-encoding pattern 6 can be created in different ways. The position-encoding pattern 6 as represented corresponds to the pattern as described in WO 01/16872. The description concerned is incorporated in the present patent application by referring to it.

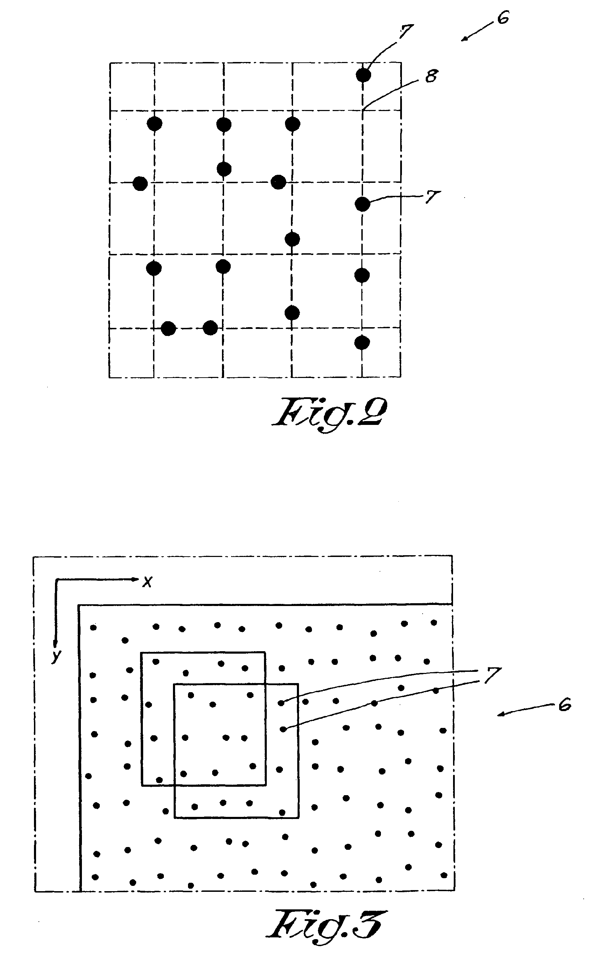

In short, and as represented in figure 2, it comes down to it that a virtual grid, represented by means of a dotted line here but not visible in reality, is provided on the writing surface 3 of the communication panel 1, and near every virtual node 8 of the grid is provided a dot 7, shifted somewhat to the top however, to the left, to the right or to the bottom in relation to the virtual node 8.

The distance between the nodes 8 amounts to 0.3 mm here, the diameter of the dots 7 is 100 $\mu$m, and

the shift in relation to the virtual node amounts to 50 $\mu$m.

Depending on the size of the communication panel 1 and the desired resolution of the positioning, four by four, i.e. sixteen dots 7, or six by six, i.e. thirty six dots 7 may suffice, for example, to identify the position.

Figure 3 shows a position-encoding pattern 6 by way of example, in which the registration of the shifts of four by four dots 7 in relation to the respective virtual nodes 8 suffices to identify each position.

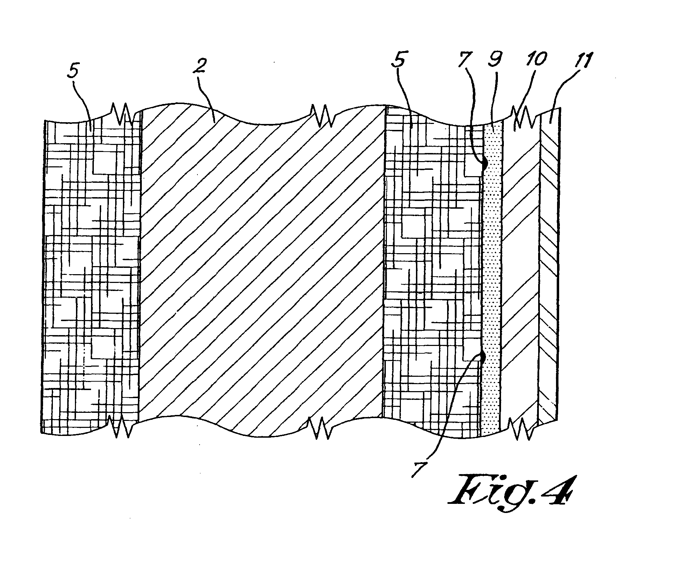

Figure 4 represents the communication panel 1 to a larger scale, seen as a section. The steel plate 2 is represented here which is provided with a predominantly white layer of vitreous enamel 5 on the front 3 4.

On top of the layer of vitreous enamel 5 and the encoding pattern 6 with dots 7 provided on it are provided three sol gel layers 9 to 11, having a thickness $\lambda/4$, $\lambda/2$, $\lambda/4$ respectively.

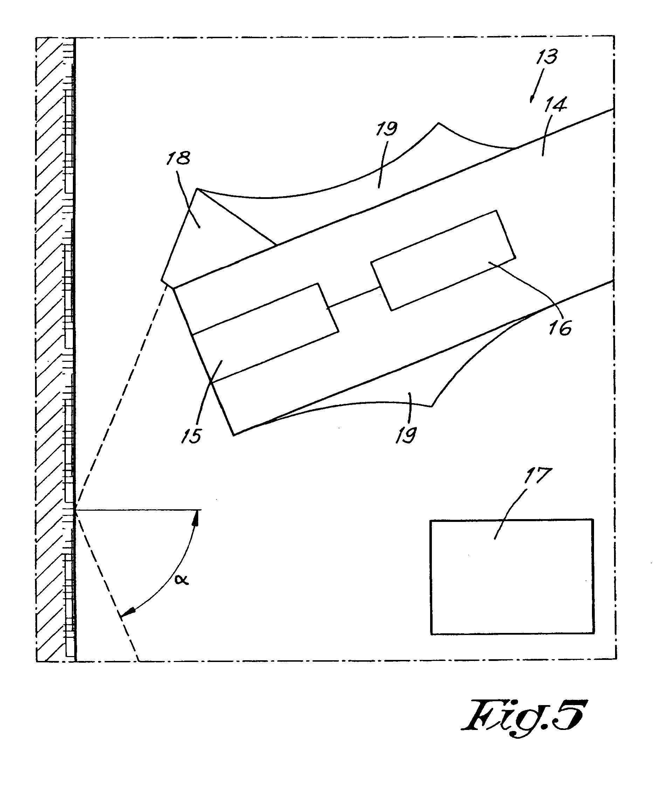

Figure 5 represents a reading instrument 13 which is capable of forming an electronic representation of the information that is written on the communication panel 1, having an integrated writing means 14 in this case, in particular a felt-tip pen 14 that is designed to write on a white vitreous enamelled communication panel 1.

The reading instrument 13 comprises a light-sensitive detector 15 that is designed to detect a position-encoding pattern 6 on a writing panel 1 so as to determine the current position of the felt-tip pen, and further the reading instrument 13 comprises communication means 16 that are fit for transmitting information regarding the position of the felt-tip pen 14 based on the position-encoding pattern 6 as detected by the above-mentioned detector 15 to at least one external unit 17.

By means of the light-sensitive detector 15 and the above-mentioned communication means 16 on the one hand, and the position-encoding pattern 6 on the communication panel 1 on the other hand, the position changes of the writing means 14 are permanently followed.

The reading instrument preferably also comprises a light source 18, for example a LED, to illuminate the surface of the communication panel 1, in particular to promote the readability of the position-encoding pattern 6 that is provided on it.

In order to solve the reading problems caused by the often high gloss on enamel panels, the detector 15 is oriented such in relation to the above-mentioned light source 18, and positioned at a distance thereof, that the detector 15 mainly registers light situated outside the angle of reflection $\alpha$ of the incident light beam.

The reading instrument 13 with its integrated writing means 14 is provided with a grip zone 19 which encourages the user to hold the writing means 14 in a preferred direction, in particular such that the detector 15 mainly registers light situated outside the angle of reflection $\alpha$ of the incident light beam.

A method for manufacturing a visual communication panel according to the invention consists in providing a steel plate 2 with a layer of vitreous enamel 5 at least on the front 3 and in firing it at for example 820°C.

This can take place for example in a continuous process whereby the thus obtained vitreous enamelled plate may be recoiled so as to be processed later, or it is immediately cut in sheets that form the base of a communication panel 1.

The above-mentioned position-encoding pattern 6 is provided by means of a direct photographic process.

This process consists in providing a photo-sensitive emulsion on the vitreous enamelled steel plate, possibly by means of a sieve. After it has dried, the film is put against the plate that has the photo-sensitive emulsion printed on it, and only then the layer of enamel 5 is exposed together with the emulsion and the film, in correspondence with the aimed representation.

Next, the film is removed, and the non-exposed and thus non-bonded emulsion is removed.

Indeed, the emulsion consists of polymers in which have been provided vitreous enamel particles and pigment. There where the emulsion is exposed, the polymers are bonded and the emulsion adheres to the vitreous enamel plate.

After the non-bonded emulsion has been removed, the enamel that is left, i.e. the enamel particles and the pigment, is fired at a temperature that is lower than the temperature at which the first layer or layers had been burnt in, for example at 740°C.

This technique is advantageous in that a position-encoding pattern 6 can be provided with high accuracy and thus with a higher resolution compared to the silkscreen printing technique.

Next, the three layers of sol gel 9 to 11 are successively provided so as to reduce any reading problems caused by the high gloss.

A layer of sol gel dispersion that has been provided is subsequently tempered so as to form a mainly glassy or ceramic cover layer.

The dispersion can be tempered at a temperature situated between 200° and 600°C, and which preferably amounts to some 510°C.

The above-mentioned layers of sol gel dispersion 9 to 11 in this case consist of a colloidal solution of inorganic metal salts and organic metal components, such as metal alkoxides, whereby this solution or, in particular, this liquid dispersion is transformed in what is called a 'sol' condition during a drying process and forms the above-mentioned cover layer after having been tempered.

The sol gel dispersion is in this case prepared from a base solution of metal alkoxides to which a watery colloidal silica solution and/or particles of metal oxide or the like are added.

The layer 9 that is provided on the enamel in this case consists of $CeF_3$ and has a refractive index n=1.65, but it may for example also be formed of $Al_2O_3$ with a refractive index n=1.76.

The middle layer 10 is in this case formed of $ZrO_2$ and has a refractive index n=2.10.

The outer layer 11 is in this case formed of $MgF_2$ and has a refractive index n=1.38.

It is clear that the different described methods for applying a position-encoding pattern 6, as well as for providing one or several sol gel layers 9-11, as well as the use of the reading instrument can be applied or can be used independently from one another, and that the selection of one of these elements does not require the presence or application of the other elements.

If a reading instrument 13 with a light source 18 is used in combination with one or several layers of sol gel, then the thicknesses or the cumulated thicknesses of these layers can be adjusted to the frequency of the light emitted by the light source 18.

It is clear that the position-encoding pattern, generally represented as dark dots in what precedes, may also be formed of light-absorbing or especially reflecting dots. Such an embodiment can be particularly useful in the case of dark chalkboards that can be written on with chalk or the like, and/or when the light source 18 emits an infrared light.

It is clear that, if the communication panel 1 concerns a chalkboard, the writing means 14 may be a piece of chalk 14 to write on said blackboard with.

The present invention is by no means restricted to the embodiment described as an example and represented in the accompanying drawings; on the contrary, such an interactive communication panel can be made while still remaining within the scope of the invention.

## Claims

1.  Interactive visual communication panel (1) in the form of a board having on the front (3) a writing surface adapted for receiving writing of felt-tip pens, which interactive visual communication panel is provided with an optically readable position-encoding dot pattern (6) over mainly the entire front (3), for creating an electronic representation of the information that is written on the writing surface (3), **characterized in that** a vitreous enamel layer (5) is provided on the front of the interactive visual communication panel (1) and **in that** the position-encoding dot pattern (6) is built of a ceramic print that has been fired on the layer of vitreous enamel (5) at temperatures higher than 500° C.

2.  Interactive visual communication panel according to claim 1, **characterized in that** the dots of the position-encoding dot pattern are dark dots, for example black dots.

3.  Interactive visual communication panel according to claim 1 or claim 2, **characterized in that** the position-encoding dot pattern (6), is provided by means of a silkscreen printing technique that makes use of a very fine sieve, for example a sieve of 140T or even finer, and of which the wire gauge is less than 35 μm.

4. Interactive visual communication panel according to claim 1 or claim 2, **characterized in that** the position-encoding dot pattern (6) is provided by means of a direct photographic process.

5. Interactive visual communication panel according to claim 1 or claim 2, **characterized in that** on the layer of enamel (5) on which is provided a position-encoding dot pattern (6), is provided a sol gel dispersion that is subsequently tempered so as to form a predominantly glassy or ceramic cover layer (9-11).

6. Interactive visual communication panel according to claim 5, **characterized in that** the thickness of the sol gel layer (9-11) is such that it corresponds to a quarter of the wavelength of the visible light, what comes down to a layer thickness for the sol gel layer (9-11) of 75 to 180 nanometers.

7. Interactive visual communication panel according to claim 5, **characterized in that** several sol gel layers (9-11) are provided, whereby the layer thicknesses and compositions of the different sol gel layers (9-11) are selected such that anti-reflective qualities are obtained.

8. Interactive visual communication panel according to claim 7, **characterized in that** the different sol gel layers (9-11) have different compositions.

9. Combination of:

   - An interactive visual communication panel according to one or more of the claims 1-8;
   - Writing means (14): and
   - A reading instrument (13), capable of forming an electronic representation of the information that is written on the communication panel, connected to or integrated with writing means (14), whereby the reading instrument is provided with a light-sensitive detector (15) which is designed to detect the position-encoding dot pattern (6) on the interactive visual communication panel (1) so as to determine the current position of the writing means (14), and

   wherein the reading instrument (13) is further provided with communication means (16) that are fit to transmit information regarding the position of the writing means (14) based on the position-encoding dot pattern (6) as was established by the above-mentioned detector (15) to at least one external unit (17), **characterized in that** the reading instrument (13) is provided with a light source (18), for example a LED, to illuminate the front (3) of the communication panel (1), in particular to improve the readability of the dot pattern (6) that is provided on it, and wherein ceramic paste used for providing the dot pattern absorbs the light of the light source of the reading instrument.

10. Combination according to claim 9, wherein the light source emits invisible infrared light and the ceramic paste used for providing the dot pattern absorbs the infrared light of 800-950 nm.

**Patentansprüche**

1. Interaktive visuelle Kommunikationstafel (1) in Form eines Boards, das an der Vorderseite (3) eine Schreibfläche aufweist, die zur Aufnahme von Schrift von Filzstiften eingerichtet ist, welche interaktive visuelle Kommunikationstafel über im Wesentlichen die gesamte Vorderseite (3) mit einem optisch lesbaren Positionscodierungs-Punktmuster (6) versehen ist, um eine elektronische Wiedergabe der auf die Schreibfläche (3) geschriebenen Information zu erzeugen, **dadurch gekennzeichnet, dass** eine Glasemailschicht (5) an der Vorderseite der interaktiven visuellen Kommunikationstafel (1) angebracht ist und dass das Positionscodierungs-Punktmuster (6) aus einem Keramikaufdruck aufgebaut ist, der bei Temperaturen von mehr als 500°C auf die Glasemailschicht (5) eingebrannt ist.

2. Interaktive visuelle Kommunikationstafel nach Anspruch 1, **dadurch gekennzeichnet, dass** die Punkte des Positionscodierungs-Punktmusters dunkle Punkte, beispielsweise schwarze Punkte, sind.

3. Interaktive visuelle Kommunikationstafel nach Anspruch 1 oder Anspruch 2, **dadurch gekennzeichnet, dass** das Positionscodierungs-Punktmuster (6) mittels einer Siebdrucktechnik angebracht ist, die von einem sehr feinen Sieb Gebrauch macht, beispielsweise einem Sieb von 140T oder noch feiner, und wovon der Drahtquerschnitt weniger als 35 μm beträgt.

4. Interaktive visuelle Kommunikationstafel nach Anspruch 1 oder Anspruch 2, **dadurch gekennzeichnet, dass** das Positionscodierungs-Punktmuster (6) mittels eines direkten photographischen Verfahrens angebracht ist.

5. Interaktive visuelle Kommunikationstafel nach Anspruch 1 oder Anspruch 2, **dadurch gekennzeichnet, dass** auf der Emailschicht (5), worauf ein Positionscodierungs-Punktmuster (6) vorgesehen ist, eine Sol-Gel-Dispersion angebracht ist, die anschließend getempert ist, um eine vorwiegend glasartige oder keramische Deckschicht (9-11) zu bilden.

6. Interaktive visuelle Kommunikationstafel nach Anspruch 5, **dadurch gekennzeichnet, dass** die Dicke der Sol-Gel-Schicht (9-11) so ist, dass sie einem Viertel der Wellenlänge des sichtbaren Lichts entspricht, was auf eine Schichtdicke für die Sol-Gel-Schicht (9-11) von 75 bis 180 Nanometer hinausläuft.

7. Interaktive visuelle Kommunikationstafel nach Anspruch 5, **dadurch gekennzeichnet, dass** mehrere Sol-Gel-Schichten (9-11) vorgesehen sind, wobei die Schichtdicken und Zusammensetzungen der verschiedenen Sol-Gel-Schichten (9-11) so ausgewählt sind, dass anti-reflektierende Eigenschaften erhalten werden.

8. Interaktive visuelle Kommunikationstafel nach Anspruch 7, **dadurch gekennzeichnet, dass** die verschiedenen Sol-Gel-Schichten (9-11) eine verschiedene Zusammensetzung aufweisen.

9. Kombination von:

- einer interaktiven visuellen Kommunikationstafel nach einem oder mehreren der Ansprüche 1-8;
- einem Schreibmittel (14); und
- einem Ableseinstrument (13), das zur Bildung einer elektronischen Darstellung der auf die Kommunikationstafel geschriebenen Kommunikation fähig ist, verbunden mit dem oder integriert in das Schreibmittel (14), wobei das Ableseinstrument mit einem lichtempfindlichen Detektor (15) versehen ist, der dazu gestaltet ist, das Positionscodierungs-Punktmuster (6) auf der interaktiven visuellen Kommunikationstafel (1) zu detektieren, um die aktuelle Position des Schreibmittels (14) zu bestimmen, und

wobei das Ableseinstrument (13) weiter mit Kommunikationsmitteln (16) versehen ist, die zur Übertragung von Information in Bezug auf die Position des Schreibmittels (14) auf Basis des Positionscodierungs-Punktmusters (6), wie durch den vorgenannten Detektor (15) festgestellt, zu mindestens einer externen Einheit (17) fähig sind, **dadurch gekennzeichnet, dass** das Ableseinstrument (13) mit einer Lichtquelle (18), beispielsweise einer LED, zum Beleuchten der Vorderseite (3) der Kommunikationstafel (1) versehen ist, spezieller zur Verbesserung der Lesbarkeit des darauf angebrachten Punktmusters (6), und wobei zum Anbringen des Punktmusters verwendete Keramikpaste das Licht der Lichtquelle des Ableseinstruments absorbiert.

10. Kombination nach Anspruch 9, wobei die Lichtquelle unsichtbares Infrarotlicht aussendet und die zum Anbringen des Punktmusters verwendete Keramikpaste das Infrarotlicht von 800-950 nm absorbiert.

**Revendications**

1. Panneau de communication visuelle interactif (1) sous la forme d'un tableau possédant sur sa face avant (3) une surface d'écriture conçue pour recevoir l'écriture de crayons-feutres, panneau de communication visuelle interactif étant muni d'une formation de points (6) encodant une position lisible par voie optique sur principalement la totalité de la face frontale (3) pour créer une représentation électronique des informations qui sont écrites sur la surface d'écriture (3), **caractérisé en ce qu'**on procure une couche d'émail vitrifié (5) sur la face frontale du panneau de communication visuelle interactif (1) et **en ce que** la formation de points (6) encodant une position est réalisée à l'aide d'une impression céramique qui a été appliquée par cuisson sur la couche de l'émail vitrifié (5) à des températures supérieures à 500 °C.

2. Panneau de communication visuelle interactif (1) selon la revendication 1, **caractérisé en ce que** les points de la formation de points encodant une position sont des points de couleur foncée, par exemple des points de couleur noire.

3. Panneau de communication visuelle interactif (1) selon la revendication 1 ou 2, **caractérisé en ce que** la formation de points (b) encodant une position est fournie au moyen d'une technique de sérigraphie qui fait usage d'un tamis très fin, par exemple un tamis de 140T, voire d'une plus grande finesse, et dont l'épaisseur de fil est inférieure à 35 $\mu$m.

4. Panneau de communication visuelle interactif (1) selon la revendication 1 ou 2, **caractérisé en ce que** la formation de points (6) encodant une position est fournie au moyen d'un processus photographique direct.

5. Panneau de communication visuelle interactif (1) selon la revendication 1 ou 2, **caractérisé en ce que**, sur la couche d'émail (5) sur laquelle on procure la formation de points (6) encodant une position, on procure une dispersion sol-gel que l'on soumet ensuite à un traitement thermique de façon à obtenir une couche de recouvrement principalement céramique ou vitreuse (9-11).

6. Panneau de communication visuelle interactif (1) selon la revendication 5, **caractérisé en ce que** l'épaisseur de la couche sol-gel (9-11) est tel qu'elle correspond à un quart de la longueur d'onde de la lumière visible, ce qui revient à une épaisseur de couche pour la couche sol-gel (9-11) de 75 à 180 nm.

7. Panneau de communication visuelle interactif (1) selon la revendication 5, **caractérisé en ce qu'**on procure plusieurs couches sol-gel (9-11), les épaisseurs et les compositions des différentes couches sol-gel (9-11) étant sélectionnées de façon à obtenir des qualités antireflet.

8. Panneau de communication visuelle interactif (1) selon la revendication 7, **caractérisé en ce que** les différentes couches sol-gel (9-11) possèdent des compositions différentes.

9. Combinaison :

   - d'un panneau de communication visuelle interactif selon une ou plusieurs des revendications 1 à 8 ;
   - d'un moyen d'écriture (14) ; et
   - d'un instrument de lecture (13) capable de former une représentation électronique des informations qui sont écrites sur le panneau de communication, relié ou intégré à un moyen d'écriture (14), l'instrument de lecture étant muni d'un détecteur sensible à la lumière (15) qui est conçu pour détecter la formation de points (6) encodant une position sur le panneau de communication visuelle interactif (1) de façon à déterminer la position actuelle du moyen d'écriture (14) ; et

   dans laquelle l'instrument de lecture (13) est en outre muni de moyens de communication (16) qui sont conçus pour transmettre des informations concernant la position du moyen d'écriture (14) en se basant sur la formation de points (6) encodant une position comme établi par le détecteur susmentionné (15) à au moins une unité externe (17) ; **caractérisée en ce que** l'instrument de lecture (13) est muni d'une source de lumière (18), par exemple une LED, pour éclairer la face frontale (3) du panneau de communication (1), en particulier pour améliorer la lisibilité de la formation des points (6) dont il est muni, et dans lequel la pâte céramique que l'on utilise pour procurer la formation de points absorbe la lumière de la source de lumière de l'instrument de lecture.

10. Combinaison selon la revendication 9, dans laquelle la source de lumière émet de la lumière infrarouge invisible et la pâte céramique que l'on utilise pour procurer la formation de points absorbe la lumière infrarouge de 800 à 950 nm.

*Fig.1*

*Fig.2*

*Fig.3*

Fig.4

*Fig.5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0116872 A
- EP 0327436 A
- WO 2006119592 A
- SE 99035412
- EP 1016588 A